# EUROPEAN PATENT APPLICATION

(11) **EP 1 097 626 A1**
(43) Date of publication of application: **09.05.2001**
(21) Application number: 00830713.4
(22) Date of filing: 30.10.2000
(51) Int. Cl.: A01D 34/86

(54) **Shredder**

(30) Priority: 04.11.1999 IT FI990128 U
(71) Applicant: Orsi, Stefano, 40050 Mascarino di Castello d'Argile (Bologna) (IT)
(72) Inventor: Orsi, Stefano, 40050 Mascarino di Castello d'Argile (Bologna) (IT)
(74) Representative: Martini, Lazzaro

(57) **Abstract**

The present invention relates to a shredder (1) of a type comprising a first half frame (3) apt for attachment to a tractor (2), a second half frame (4) intended to support a shredding member kinematically connected to the tractor (2), and connecting means between said first (3) and second (4) half frame allowing a relative movement therebetween, and comprising a bar or guide (33), interposed between the two half frames and having a carriage (40) movable therealong on which the half frame (4) is attached for translating relative to the other half frame (3); the kinematic connection between the tractor and the shredding member comprises a hydraulic circuit having at least a substantially flexible portion.

## Description

The present invention relates to a shredder.

The shredders are machines used for cleaning road edges, ditch banks and channels, and for cutting hedges, etc. These machines are carried by farm tractor and operate the cutting of grass and shrubs by means of a shredding member consisting generally of a shaft on which blades (or similar elements) are perpendicularly attached, the shaft being driven into rotation about its axis when the machine operates on the ground.

In its normally adopted configuration, a shredder comprises a structure which is fixed to suitable attachments provided on farm tractors, and consists of a first half frame solid to the tractor and a second half frame movable with respect to the first and supporting said shredding member.

The second half frame can be moved with respect to the first by interposing therebetween an articulated quadrilateral suited for determining a kind of rototranslation of the second half frame with respect to the first one in a plane substantially parallel to the ground. Moreover, the second half frame can be rotated about a horizontal axis so as to incline the operating plane of the shredding member.

The motion of the shredding member, that is, the rotation of the blades' shaft, is accomplished by means of a cardan shaft connected, at one end, to the power takeoff of the tractor and, at the other end, to one or more transmission elements of the blades' shaft.

when using the shredder, it is necessary that the second half frame, the one which carries the shredding member, be moved relative to the longitudinal axis of the tractor of an extent that can be varied according to the type of work to be carried out, in order to dispose the shredding member in a position suitable for operation. Owing to the maximum angles of operation of said cardan shaft which provides for the transmission of motion, which angles are an unsurmontable physical limit, the translation of the second half frame relative to the first cannot exceed a predetermined limit value. Upon reaching such limit value, since it is no longer possible to move the shredding member relative to the tractor, the latter must be moved along a path as close as possible to the work region. In practice, under these work conditions, the tractor must be positioned on the edge of the road, with its external wheel at a site that may be dangerous owing both to the actual closeness of the ditch or channel edge to be cleared, and the consistency of .such peripheric region which is often unable to provide an adequate resistance to the tractor weight. For these reasons, with the shredders of known type, dangerous situations may arise able to put at risk the safety of the operator and, besides, such conditions may result which lead to a poor work efficiency because of the high attention they require for driving the tractor.

The main object of the present invention is to overcome the said drawbacks.

This result has been achieved, according to the invention, by providing a shredder having the features indicated in the characterizing part of claim 1. Further characteristics being set forth in the dependent claims.

The advantages deriving from the present invention lie essentially in that it is possible to construct a shredder able to operate under the highest safety conditions, that the translation of the second half frame is of relatively great extent and is achieved in a relatively simple way, that the shredder is of significant simple construction allowing lower costs for manufacturing, operation and maintenance, that the shredder in question maintains its characteristics unchanged even after a prolonged service periods.

These and other advantages and characteristics of the invention will be best understood by anyone skilled in the art from a reading of the following description in conjunction with the attached drawings given as a practical exemplification of the invention, but not to be considered in a limitative sense, wherein:
- Fig. 1 is a schematic rear elevation view of a feasible embodiment of a shredder according to the invention; the shredder is shown associated with a tractor schematically and partially represented, and being in a position in which it takes up the minimum space, that is, in which the lateral displacement of the shredding member is the least;
- Fig. 2 is a plan view of the embodiment of Fig. 1, whwrein, likewise in the successive figures, the tractor is partially and schematically represented;
- Figs. 3 and 4 show the shredder of the previous figures in the condition in which the lateral displacement of the shredding member is the longest; Fig. 3 being a rear elevation view and Fig. 4 being a plan view; and
- Figs. are two respective elevation views of the embodiment in the preceding figures, wherein the shredding machine is shown in two other working positions.

In the attached drawings, a shredder constructed according to the present invention is indicated by the numeral (1) as a whole. The shredder (1) is pulled by a farm tractor (2) to which it is engaged, likewise the shredders of known type, in correspondence of the attachment (12) provided at the back of tractor (2).

The shredder (1) is essentially made up of two parts or half frames (3) and (4). The first half frame (3) is fixed to the arms (13) of the attachment (12) of the tractor (2) and forms one of the major sides of an articulated quadrilateral (30); the second half frame is intended to provide support and seat for the shredding member.

The shredding member, represented by way of example in the drawings, exhibits a shaft which, with the shredder in operation, is disposed parallel to the ground's plane; obviously, the shaft may be disposed perpendicular to the ground or in other suitable position.

One part or half frame (3) of the shredder (1) is solid to the tractor, whereas the other part (4) is movable with respect to the first to allow a suitable positioning of the supported shredding member.

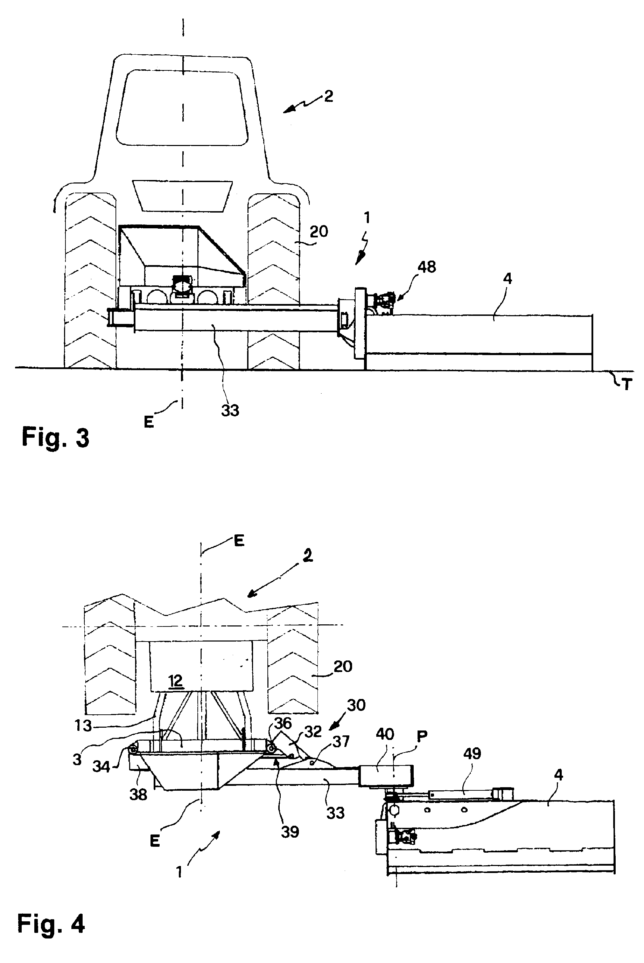

Hinged on the first half frame (3), in correspondence of respective journals (34) and (36), are the two minor, L-shaped, sides of the articulated quadrilateral (30) on which a jack (39)
- whose driving system is not shown herein for being similar to that known in the art - is made to act. In correspondence of the activation of the jack (39), that is, upon the positioning of the latter in a configuration of maximum extension, as best seen in Fig. 4, the forth side (33) of the quadrilateral is subjected to a kind of rototranslation by being moved relative to the first half frame (3) over a plane substantially parallel to the ground. In practice, the fourth side (33) of the articulated quadrilateral (30) moves parallel to the half frame (3) up to a lateral position (to the right in Figs. 3-6) with respect to the axis (E) of the tractor.

Advantageously, in addition to the displacement obtained by the articulated quadrilateral (30), the shredder of the present invention provides for a second relative motion between the two half frames (3) and (4). In fact, the fourth side (33) of the quadrilateral consists of a guide or bar, disposed substantially horizontal, upon which a carriage (40) is able to move bidirectionally.

The driving into motion of the carriage (40) along the guide (33) may be achieved, for example, by means of a toothing formed along the guide (33) and by providing the carriage (4) with a motorization acting on a pinion meshing with the toothing of the guide (33). Neither the toothing nor the pinion meshing therewith are represented in the figures. It is understood that the displacement of the carriage (40) along the guide (33) can also be achieved in other ways.

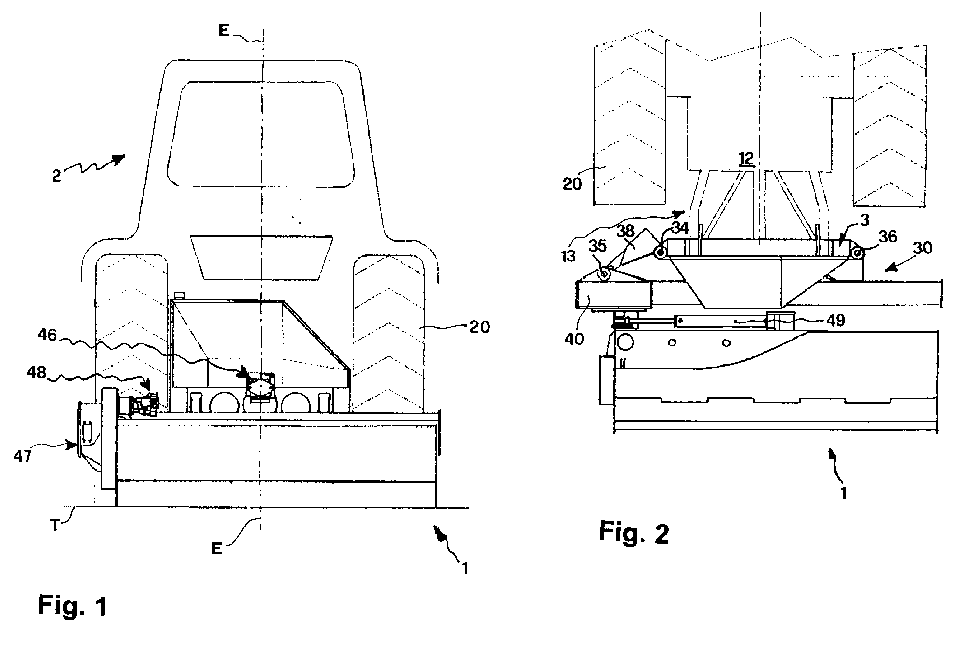

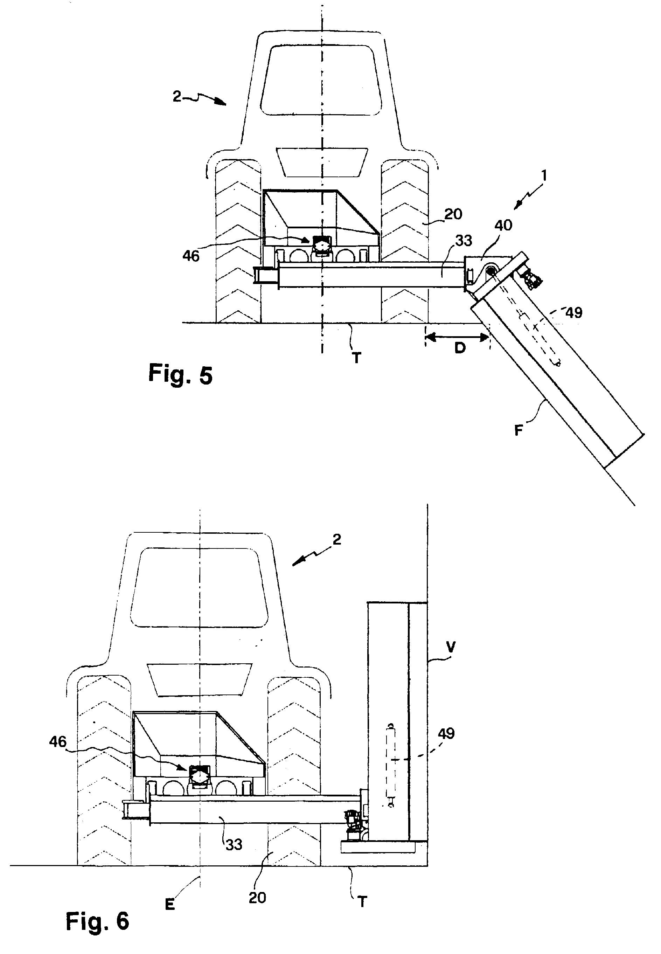

The second half frame (4), intended to support the shredding member in a manner substantially similar to what is provided by the prior art, can be driven into rotation about a horizontal axis (P) by the jack (49). In this way, the shredding member is able to shift from the substantially horizontal position shown in Figs. 1-4, to the downwardly inclined position of Fig. 5, or to the substantially vertical position of Fig. 6. Such variation of inclination makes it possible to operate either on a ground (T) having a developmnet which is mostly flat or in correspondence of ditches (F) or along the vertical development of hedges (V).

As set forth above, the shredding member comprises a shaft having fixed thereon a plurality of blades (or other similar means) intended to interact with the grass or shrubs. Moving the shaft according to the prior art requires the use of a cardan shaft connected to the power takeff of the tractor (12). In the shredder (1) of the present invention, the motion of the shredding member's shaft is transmitted via a hydraulic circuit comprising a flexible connection: in this way, the limits of the prior art relevant to the angles of work of the cardan shaft are successfully overcome.

In practice, the hydraulic circuit may comprise a motor (48), for example but not exclusively with radial pistons, disposed in correspondence of the second half frame (4) and connected to the blades' shaft via a series of driving elements (47). The motor (48) is connected by flexible tubes (not illustrated) to a pump (46) which is, in turn, connected to the power takeoff of the tractor (2) via a fixed cardan joint. In this way it is possible to move the two portions of the shredder (1) over such lateral extensions which are inconceivable with the shredders of known type. According to the present invention, therefore, the ways in which there is provided the kinematic connection between the tractor and the shredding member allow side displacements surprisingly greater than those obtained, in the known shredders, with the articulated quadrilateral. Referring now to the non-limiting example of Fig. 5, the distance (D) between the external wheel of the tractor (2) and the edge of the ditch (F) is of such an extent as to make it possible to operate under extremely safe conditions which also allow a more efficient utilization of the machine, with higher performance over equal service time.

## Claims

1. Shredder of a type comprising a first half frame apt for attachment to a tractor, a second half frame intended to support a shredding member kinematically connected to the tractor, and connecting means between said first and second half frames allowing a relative movement therebetween, the shredder being characterized in that the connection means between said first (3) and second (4) frame comprises a bar or guide (33), interposed between the two half frames and having a carriage (40) movable therealong on which a half frame (4) is attached for translating relative to the other half frame (3) and in that the kinematic connection between the tractor and the shredding member comprises a hydraulic circuit having at least a substantially flexible portion.

2. Shredder according to claim 1, characterized in that said connection means comprise an articulated quadrilateral (30) said bar or guide (33) of which forms one of the sides.

3. Shredder according to claim 1, characterized in that said carriage (40) is solid to said second half frame (4).

4. Shredder according to claim 1, characterized in that said hydraulic circuit comprises a motor (48) connected, via flexible tubes, to a pump (46) fixedly attachable to the power takeoff of the tractor (2).

5. Shredder according to claim 2, characterized in that said articulated quadrilateral (30) has two minor sides (38, 32) substantially L-shaped.

6. Shredder according to claim 1, characterized in that said carriage (40) is provided with a motor acting on a relevant pinion, and in that a toothing is provided on said guide (33) in meshing engagement with said pinion to allow the displacement of the carriage (40) along the guide (33).
